# EUROPÄISCHE PATENTSCHRIFT

(11) **EP 2 205 423 B1**
(45) Veröffentlichungstag und Bekanntmachung des Hinweises auf die Patenterteilung: **26.09.2012**
(21) Anmeldenummer: 08841389.3
(22) Anmeldetag: 17.10.2008
(51) Int. Cl.: B29C 47/88

(54) **VERFAHREN ZUR ENERGIENUTZUNG BEIM KÜHLEN VON EXTRUSIONSPROFILEN**
METHOD FOR ENERGY USAGE WHEN COOLING EXTRUSION PROFILES
PROCÉDÉ D'UTILISATION D'ÉNERGIE LORS DU REFROIDISSEMENT DE PROFILÉS D'EXTRUSION

(30) Priorität: 23.10.2007 DE 102007050949
(43) Veröffentlichungstag der Anmeldung: 14.07.2010
(73) Patentinhaber: battenfeld-cincinnati Austria GmbH, 1230 Wien (AT)
(72) Erfinder: SEHNAL, Erik, A-2500 Baden (AT)
(86) Internationale Anmeldenummer: PCT/EP2008/064081
(87) Internationale Veröffentlichungsnummer: WO 2009/053319

(56) Entgegenhaltungen:
- EP-A- 0 659 537
- DE-A1- 19 709 895
- DE-A1- 19 745 843
- DE-C1- 10 109 958
- DE-U1- 8 805 979
- FR-A1- 2 322 724
- US-A- 5 514 325

## Beschreibung

Die Erfindung betrifft ein Verfahren zur Energienutzung beim Kühlen von Extrusionsprofilen, vorzugsweise Rohren, bei dem Energie in Form von Wärme zum Aufschmelzen des Kunststoffes zugeführt wird und nach der Formgebung mindestens in den Vorrichtungen Werkzeug, Kalibrierung und Kühlbad solange dem Kunststoff wieder Wärme entzogen wird, bis dieser selbsttragend ist.

Bei der Extrusion wird aufgeschmolzene Kunststoffmasse mittels eines Extruders durch ein Extrusionswerkzeug gepresst, wodurch dem Kunststoffmaterial die gewünschte Form zugefügt wird. Hierzu wird zunächst das Kunststoffmaterial durch Zuführen von Wärme aufgeschmolzen und anschließend das extrudierte Kunststoffprofil so lange gekühlt, bis es formstabil ist. Üblicherweise wird hierzu stark gekühltes Wasser, in der Regel im Bereich um 15°C, dazu verwendet, das extrudierte Rohr bereits nach dem Verlassen des Extrusionswerkzeuges einem entsprechenden Kühlbad oder einer Kühlstrecke zuzuführen. Bis zur Formstabilisierung des Kunststoffrohres ist eine entsprechende Strecke zu durchlaufen, in der das Kunststoffprofil permanent gekühlt werden muss. Da jedoch die Massetemperatur des Kunststoffes stetig abnimmt, muss auch mit entsprechend kaltem Kühlmedium gearbeitet werden. Um das Kühlmedium auf einem ausreichend niedrigen Temperaturniveau zu halten, ist ein hoher Energieaufwand erforderlich.

Eine Vorrichtung zum Abkühlen von Kunststoffprofilen wird in der EP 0 659 537 A2 offenbart. Hier wird ein Kühlwasserbecken mit mehreren Kammern beschrieben bei dem das Kühlmedium von Kammer zu Kammer geleitet wird.

Weiterhin wird auf die FR 2 322 724 A1 verwiesen, aus der eine Einrichtung zum Kalibrieren erzeugter Profile bekannt ist, bei der Flüssigkeit von einem Wasserspeier in einem Verbindungsrohr, durch welches das erzeugte Profil geführt wird, entgegen der Förderrichtung des Profils in einen benachbarten Hohlraum, aus welches es anschließend dem Kreislauf entzogen wird, geleitet wird.

Derartige Systeme haben folglich den Nachteil, dass zunächst Energie zum Aufschmelzen des Kunststoffes erforderlich ist, aber auch weiterhin Energie aufgebracht werden muss, da die erhitzte Kunststoffmasse wieder zum Zwecke der Formstabilisierung heruntergekühlt werden muss.

Aufgabe der vorliegenden Erfindung ist es daher, ein Verfahren anzubieten, mittels dem der Energieeinsatz insbesondere zum Kühlen der Extrusionsprofile, vorzugsweise Rohre, zu reduzieren ist und zusätzlich ein verbessertes Temperaturniveau der Abwärme erreicht wird.

Die Lösung der Aufgabe ist in Verbindung mit dem Oberbegriff des Anspruches 1 dadurch gekennzeichnet, dass ein Kühlmedium zum Kühlen entgegen der Extrusionsrichtung die Extrusionslinie durchläuft, wobei das zur Kühlung verwendete Medium von einer Kühlstation zur nächsten geführt wird, und wobei sich das Kühlmedium in jeder Kühlstation weiter erwärmt, **wobei das Kühlmedium von einer Kühlstation (6) zur nächsten Kühlstation (6) nicht entlang des Extrusionsprofils (3) geführt wird.**

Versuche haben nämlich gezeigt, dass eine ausreichende Formstabilisierung nach dem Extrusionsprozess erreicht wird, wenn eine ausreichende Temperaturdifferenz zwischen dem relativ heißen Extrudat und dem Kühlmedium vorherrscht. Hierbei ist es nicht erforderlich, dass diese extrem groß ist. Die Erfindung setzt also dort an, wo die größte Effizienz zu erreichen ist. Innerhalb der Extrusionslinie kühlt bzw. wird das Profil respektive Rohr stetig abgekühlt und verliert somit an Wärme. Folglich wird gegen Ende der Extrusionslinie, um die nötige Temperaturdifferenz zwischen dem Profil und dem Kühlmedium zu haben, ein Kühlmedium mit der, absolut betrachtet, niedrigsten Temperatur benötigt, wobei hingegen am Anfang der Extrusionslinie ein deutlich wärmeres Kühlmedium ausreicht, um die erforderliche Temperaturdifferenz zwischen Kunststoffmasse und Kühlmedium zu erreichen. Aus diesem Grund wird mit dem kalten Kühlmedium am Ende der Extrusionslinie begonnen und dieses entgegen der Extrusionsrichtung Richtung Extrusionswerkzeug zum Kühlen eingesetzt, da, wie oben erwähnt, ein im Laufe des Prozesses erwärmtes Kühlmedium durchaus an der nächsten Station eine ausreichende Temperaturdifferenz aufweist.

Hierbei ist vorgesehen, dass die einzelnen Vorrichtungen, die mit dem Kühlmedium durchströmt werden, in Serie bzw. Reihe hintereinander geschaltet sind.

Je nach Einsatzgebiet kann die Temperatur des Kühlmediums so abgestimmt werden, dass in jedem der zu durchlaufenden Vorrichtungen die Temperaturdifferenz zwischen dem Kühlmedium und dem Kunststoffprofil weitestgehend konstant bleibt, in jedem Fall kann sichergestellt werden, dass ein vorbestimmter Differenzwert nicht unterschritten wird. Es wird also dafür Sorge getragen, dass in jeder der Vorrichtungen eine ausreichende Kühlung des Kunststoffprofiles realisiert wird.

Durch dieses Verfahren wird das einmal herunter gekühlte Kühlmedium ohne weitere Zwischenkühlung in der gesamten Extrusionslinie eingesetzt, wodurch die zur Kühlung aufzubringende Energie um 30 - 90%, vorzugsweise 50 - 80%, insbesondere 70-80% reduziert wird. Die Reduktion wirkt sich vor allem in der Pumpenenergie und/oder der Kältemaschinenleistung aus. Es erhöht sich die Temperaturspreizung von herkömmlich 5 Grad auf durchschnittlich 35 Grad und dadurch erfolgt eine Reduktion des Volumensstromes um den Faktor 7 (35/5) bei gleichem Energieinhalt sowie Erhöhung des Anteils der freien Kühlung, wodurch sich der energieintensive Kältemaschineneinsatz ebenfalls um ein vielfaches reduzieren lässt. Der Anteil ist abhängig vom Außentemperaturverlauf.

Zusätzlich erhöht sich auch die Nutzungsmöglichkeit der verbleibenden Abwärme des Kühlwassers, weshalb vorteilhafterweise die verbleibende Abwärme des Kühlwassers zum Heizen oder zur Warmwasserbereitung genutzt wird.

Versuche haben gezeigt, dass die Temperatur des Kühlwassers, nachdem es den Prozess durchlaufen hat, zwischen 30 und 70°C, vorzugsweise bei 50°C liegt.

In den Zeichnungen ist das Prinzip der Erfindung schematisch wiedergegeben.
- Fig. 1: zeigt den Stand der Technik
- Fig. 2: den Ablauf gemäß der Erfindung und
- Fig. 3: den Energieverlauf

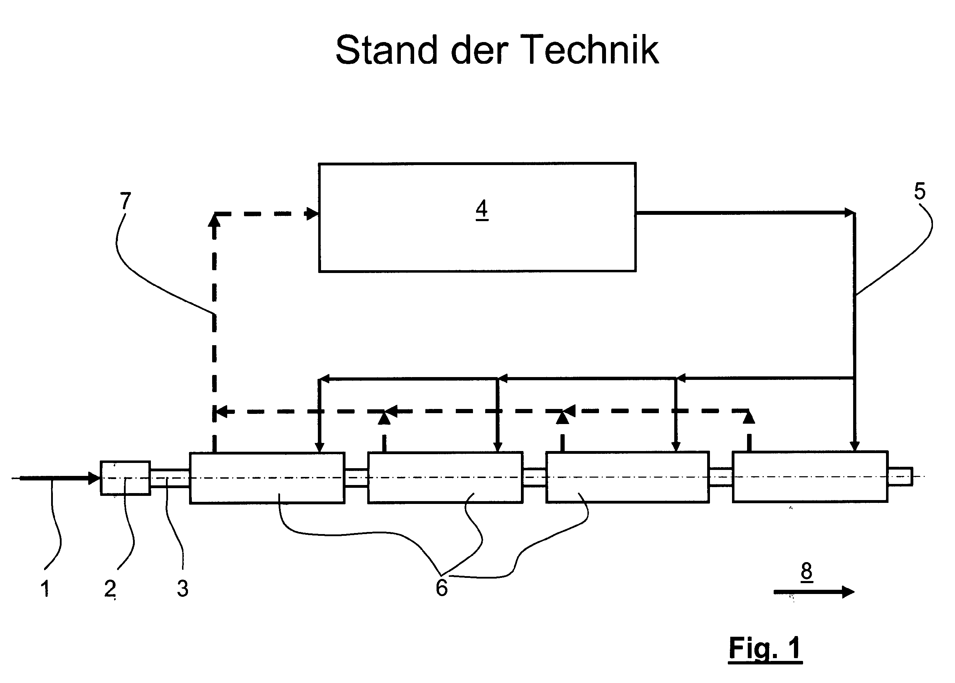

In Figur 1 wird schematisch der Kühlprozess anhand einer Rohrextrusionslinie gemäß den Stand der Technik wiedergegeben. Die von einem Extruder erzeugte Schmelze 1 wird einem Werkzeug 2 zugeführt, durch das die Schmelze 1 gepresst wird, wodurch ein Rohr 3 entsteht. Zur Formstabilisierung durchläuft das erzeugte Rohr 3 diverse Kühlstationen 6. Jede der Kühlstationen 6 steht mit einer Kühlleitung 5 in Verbindung, die direkt von einer Kältemaschine 4, meist mit Kühlturm, gespeist wird. Somit wird jede der Kühlstationen 6 mit dem einen Kühlmedium mit weitgehend gleicher Temperatur, zum Beispiel mit Wasser vom 15°C gespeist. Jede einzelne Kühlstation 6 steht mit dem Rücklauf 7 in Verbindung, in den das Kühlwasser nach jedem Durchlauf der einzelnen Kühlstationen 6 eingeleitet wird. Das Kühlwasser erwärmt sich beispielsweise in jeder Kühlstation 6 um 3-8°C und gelangt so mit einer Temperatur von beispielsweise 20°C in dem Rücklauf 7. Analoges geschieht in jeder weiteren Kühlstation 6, so dass der Kältemaschine/Kühlturm 4 das gesamte Kühlwasser mit einer Temperatur hier von etwa 20°C zugeführt wird. Die Extrusionsrichtung ist mit dem Pfeil 8 wiedergegeben.

Die Temperaturdifferenz zwischen Vor- und Rücklauf ist entsprechend sehr gering (hier 5°C), der benötigte Kühlmediumstrom entsprechend hoch. Weiterhin ist aufgrund des niedrigen Temperaturniveaus des Rücklaufs (hier 20°C) der Anteil der energieintensiven Kühlung durch Kältemaschinen extrem hoch und der Anteil des energetisch sehr günstigen Kühlturms (freie Kühlung) sehr niedrig.

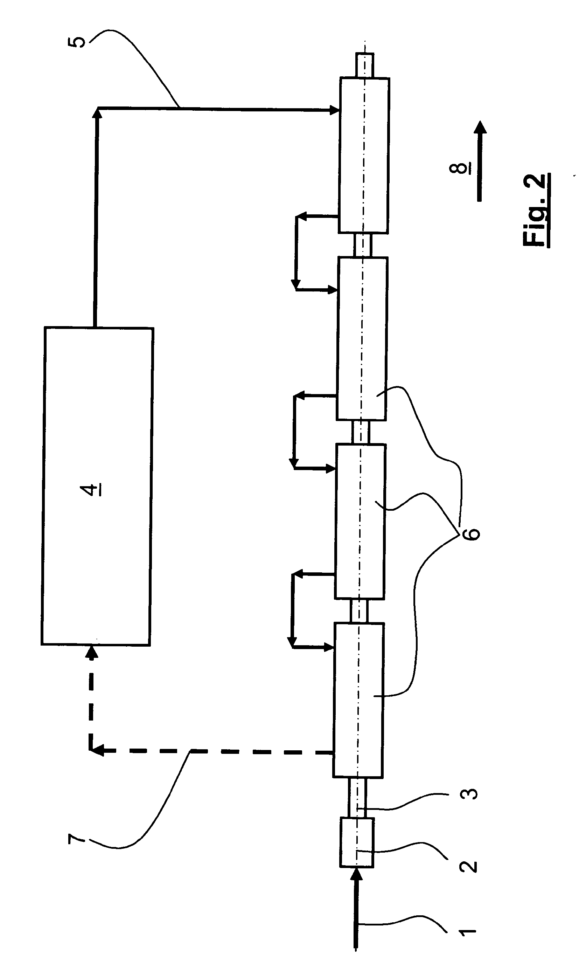

In der Figur 2 ist das Prinzip der Erfindung wiedergegeben. Sie zeigt wiederum eine Rohrextrusionslinie, bei der von einem Extruder erzeugte Schmelze 1 einem Werkzeug 2 zugeführt wird, durch das die Schmelze 1 gepresst wird, wodurch ein Rohr 3 entsteht. Zur Formstabilisierung durchläuft das erzeugte Rohr 3 auch hier diverse Kühlstationen 6. Jede der Kühlstationen 6 steht mit einer Kühlleitung 5 in Verbindung. Der entscheidende Unterschied zur der herkömmlichen Kühlung liegt darin, dass das Kühlmedium entgegen der Extrusionsrichtung 8 zunächst in die vom Werkzeug 2 entfernteste Kühlstation 6 eingebracht wird und dann nicht in einen Rücklauf 7, sondern der entgegen der Extrusionsrichtung 8 gesehen nächsten Kühlstation 6 zugeführt wird. Diese Weiterleitung in die nächste Kühlstation 6 wiederholt sich solange, bis die Kühlstation 6 direkt hinter dem Werkzeug 2 durchlaufen wurde. Erst dann gelangt das Kühlmedium in den Rücklauf 7 und wird dann wieder der Kältemaschine/Kühlturm 4 zugeführt. Gemäß dieser Verfahrensweise erwärmt sich beispielsweise das Kühlwasser von 15°C auf beispielsweise 25°C, wobei das Rohr 3 in der letzten Kühlstation eine Temperatur vom 40°C aufweist. In der davor liegenden Kühlstation 6 hat das Rohr z.B. noch eine Temperatur von 80°C, welches dann mit dem Kühlwasser von 25°C aus der letzten Kühlstation 6 gekühlt wird. Um diese Temperaturbeispielskette fortzuführen wird somit mit Wasser von 15°C ein Rohr 3 von 80°C auf 40°C gekühlt und erwärmt sich auf 25°C. Das 25°C warme Wasser kühlt ein 120°C heißes Rohr 3 auf 80°C und erwärmt sich dabei auf 35°C. Dieses Wasser kühlt in der nächsten Kühlstation ein Rohr 3 von 160°C auf 120°C. Die Temperatur des Wassers erhöht sich dabei auf 45°C. Beim Abkühlen des das Werkzeug 2 verlassenden Rohren 3 mit einer Temperatur von 200°C auf 160°C erhöht sich die Temperatur des Wassers auf rund 55°C, welches dann über den Rücklauf 7 der Kältemaschine/Kühlturm 4 zum erneuten Herunterkühlen zugeführt wird.

Dadurch erhöht sich die Temperaturspreizung zwischen Vor- und Rücklauf in diesem Beispiel von 5°C gemäß dem Stand der Technik auf 40°C wie im Ausführungsbeispiel gemäß der Erfindung. Dadurch kommt es zu mehreren Effekten:
- Der benötigte Volumenstrom (und damit die benötigte Pumpleistung) des Kühlmediums reduziert sich im selben Verhältnis wie sich die Temperaturspreizung erhöht (in diesem Beispiel also um Faktor 8).
- Die erhöhte Rücklauftemperatur erlaubt den verstärkten Einsatz von Kühltürmen, so genannte freie Kühlung, die ohne Kältemaschinen auskommt. Beträgt die Grenztemperatur der freien Kühlung beispielsweise 20°C (Grenztemperatur meist einige Grad über Durchschnittstemperatur der Umgebung oder des Grundwassers), so können in diesem Beispiel 7/8 der benötigten Kühlleistung über freie Kühlung bereitgestellt werden. Beim dargestellten Stand der Technik war dieser Anteil 0.
- Das hohe Temperaturniveau des Rücklaufs erlaubt zusätzlich die Nutzung der Abwärme vom Kühlvorgang der Kunststoffrohre. Denn nur wenn das Temperaturniveau deutlich über der Umgebungstemperatur liegt, ist die Nutzbarmachung energetisch sinnvoll und wirtschaftlich vertretbar. Durch beispielsweise 55°C ist das jedenfalls gegeben. Die Nutzung für Raumwärme, Warmwasser oder Gärtnereibetriebe sind Beispiele.

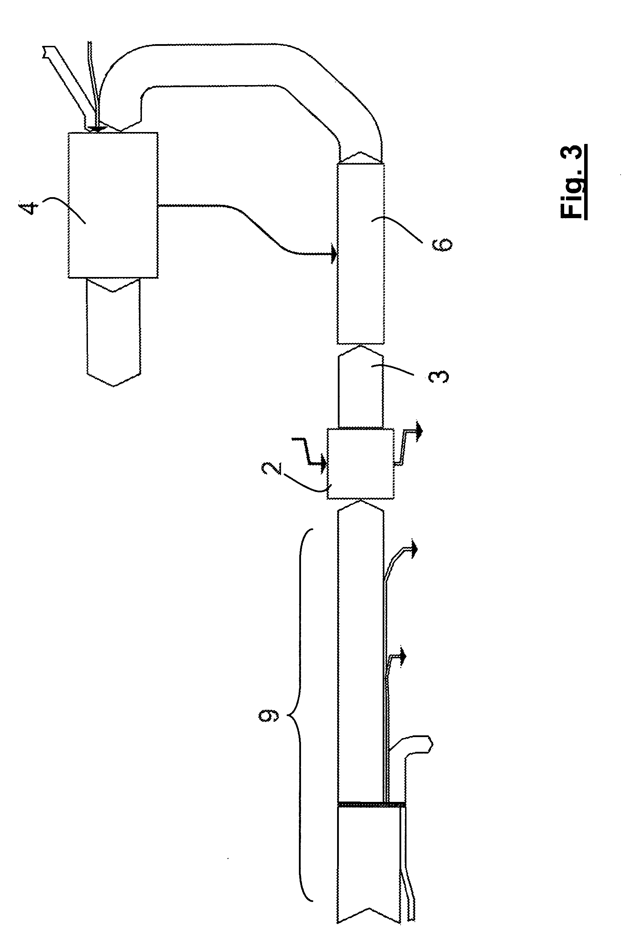

Das in der Figur 3 dargestellte Schema stellt den prinzipiellen Energiefluss im Prozess dar, wobei die Breite der jeweils dargestellten Pfeile die Energiemengen symbolisiert. Somit wird im Bereich 9 der Aufschmelzvorgang des Kunststoffes wiedergegeben, bei dem von der aufgebrachten Energie ca. 80% im extrudierten Rohr 3 verbleibt. Ein Teil geht in Form von Abstrahlung am Werkzeug 2, am Zylinder, am Einzug oder durch Antriebsverluste verloren, was durch die unterschiedlichen klein dargestellten Pfeile verdeutlicht wird. Die noch verbleibende Energie, in erster Linie Wärmeenergie, muss dem Kunststoffrohr in den Kühl- bzw. Vakuumbädern 6 entzogen werden. Die ans Kühlmedium übertragene Energie muss in Kältemaschine/Kühlturm 4 wiederum dem Kühlmedium entzogen werden.

Die Erfindung liegt unter anderem darin, durch diese Art der Abkühlung die Energiedichte und Rücklauftemperatur entsprechend zu erhöhen und dadurch diese benötigte Rückkühlung energetisch zu verbessern, den Energiebedarf der Rückkühlung des Kühlmediums wesentlich zu verringern und durch das höhere Energieniveau des Rücklaufs des Kühlmediums die Nutzung der im Kühlmedium gespeicherten Wärmeenergie zu ermöglichen.

Mit dem erfindungsgemäßen Verfahren wird das gesamte Temperatumiveau erhöht, wodurch die Abwärme für die energetische Nutzung nutzbar gemacht wird. Es ist eine effektive Reduzierung des Energieeinsatzes beim Kühlen in der Extrusion, insbesondere der Rohrextrusion, möglich.

### Bezugszeichenliste:

- 1: Schmelze
- 2: Werkzeug
- 3: Rohr
- 4: Kältemaschine
- 5: Kühlleitung
- 6: Kühlstation
- 7: Rücklauf
- 8: Extrusionsrichtung
- 9: Aufschmelzbereich

## Patentansprüche

1. Verfahren zur Energienutzung beim Kühlen von Extrusionsprofilen, vorzugsweise Rohren, bei dem Energie in Form von Wärme zum Aufschmelzen des Kunststoffes zugeführt wird und nach der Formgebung mindestens in den Vorrichtungen Werkzeug (2), Kalibrierung (6) und Kühlbad (6) so lange dem Kunststoff wieder Wärme entzogen wird, bis dieser selbsttragend ist,
**dadurch gekennzeichnet, dass**
ein Kühlmedium zur Kühlung entgegen der Extrusionsrichtung (8) die Extrusionslinie durchläuft,
wobei das zur Kühlung verwendete Medium von einer Kühlstation (6) zur nächsten geführt wird und
wobei sich das Kühlmedium in jeder Kühlstation (6) weiter erwärmt,
**wobei das Kühlmedium von einer Kühlstation (6) zur nächsten Kühlstation (6) nicht entlang des Extrusionsprofils (3) geführt wird.**

2. Verfahren nach Anspruch 1, **dadurch gekennzeichnet, dass** die Vorrichtungen, durch die das Kühlmedium geführt wird, in Reihe hintereinander liegen.

3. Verfahren nach Anspruch 1 oder 2, **dadurch gekennzeichnet, dass** die Temperaturdifferenz zwischen dem Kühlmedium und dem Kunststoffprofil einen vorbestimmten Wert nicht unterschreitet, vorzugsweise weitgehend konstant bleibt.

4. Verfahren nach mindestens einem der vorigen Ansprüche, **dadurch gekennzeichnet, dass** die zur Kühlung aufzubringende Energie um 30-90%, vorzugsweise 50-80%, insbesondere um 70-80%, reduziert wird.

5. Verfahren nach mindestens einem der vorigen Ansprüche, **dadurch gekennzeichnet, dass** die Pumpenenergie und/oder die Kältemaschinenleistung um 30-90%, vorzugsweise 50-80%, insbesondere um 70-80%, reduziert wird.

6. Verfahren nach mindestens einem der vorigen Ansprüche, **dadurch gekennzeichnet, dass** Abwärme des Kühlwassers zur Heizung und/oder Warmwasserbereitung genutzt wird.

7. Verfahren nach mindestens einem der vorigen Ansprüche, **dadurch gekennzeichnet, dass** die Temperatur des Kühlwassers, nachdem es den Prozess durchlaufen hat, zwischen 30° und 70°C, vorzugsweise bei 50°C liegt.

## Claims

1. Method for energy usage when cooling extrusion profiles, preferably pipes, in which energy in the form of heat is supplied to melt the plastics material and, after shaping has taken place at least in the devices comprising the die (2), the calibrating unit (6) and the cooling bath (6), heat is extracted again from the plastics material until the latter is self-supporting,
**characterized in that**,
for cooling, a cooling medium passes through the extrusion line counter to the direction of extrusion (8),
the medium that is used for cooling being passed from one cooling station (6) to the next, and
the cooling medium heating up again in each cooling station (6),
the cooling medium not being passed from one cooling station (6) to the next cooling station (6) along the extrusion profile (3).

2. Method according to Claim 1, **characterized in that** the devices through which the cooling medium is passed lie one behind the other in series.

3. Method as claimed in Claim 1 or 2, **characterized in that** the temperature difference between the cooling medium and the plastics profile does not go below a predetermined value, preferably remains largely constant.

4. Method according to at least one of the preceding claims, **characterized in that** the energy to be provided for cooling is reduced by 30-90%, preferably 50-80%, in particular by 70-80%.

5. Method according to at least one of the preceding claims, **characterized in that** the pumping energy and/or the refrigerating machine output is reduced by 30-90%, preferably 50-80%, in particular by 70-80%.

6. Method according to at least one of the preceding claims, **characterized in that** waste heat of the cooling water is used for heating and/or hot water preparation.

7. Method according to at least one of the preceding claims, **characterized in that** the temperature of the cooling water after it has passed through the process lies between 30° and 70°C, preferably at 50°C.

## Revendications

1. Procédé d'utilisation d'énergie lors du refroidissement de profilés extrudés, de préférence de tubes, dans lequel de l'énergie est apportée sous forme de chaleur pour la fusion de la matière synthétique et, après le façonnage au moins dans les dispositifs que forment l'outil (2), l'étalonnage (6) et le bain de refroidissement (6), de la chaleur est prélevée de la matière synthétique jusqu'à ce que cette dernière soit autoportante,
**caractérisé en ce que**
un fluide de refroidissement traverse la ligne d'extrusion dans le sens opposé à la direction d'extrusion (8) en vue du refroidissement,
**en ce que** le fluide utilisé pour le refroidissement et provenant d'un poste de refroidissement (6) est amené au poste de refroidissement suivant et
**en ce que** le fluide de refroidissement s'échauffe de nouveau dans chaque poste de refroidissement (6),
le fluide de refroidissement n'étant pas guidé le long du profilé extrudé (3) entre un poste de refroidissement (6) et le poste de refroidissement (6) qui suit.

2. Procédé selon la revendication 1, **caractérisé en ce que** les dispositifs que traverse le fluide de refroidissement sont disposés en série les uns à la suite des autres.

3. Procédé selon les revendications 1 ou 2, **caractérisé en ce que** la différence de température entre le fluide de refroidissement et le profilé en matière synthétique reste supérieure à une valeur prédéterminée et de préférence reste largement constante.

4. Procédé selon au moins l'une des revendications précédentes, **caractérisé en ce que** l'énergie à apporter pour le refroidissement est réduite de 30 à 90 %, de préférence de 50 à 80 % et en particulier de 70 à 80 %.

5. Procédé selon au moins l'une des revendications précédentes, **caractérisé en ce que** l'énergie de pompage et/ou la capacité de refroidissement des machines est réduite de 30 à 90 %, de préférence de 50 à 80 % et en particulier de 70 à 80 %.

6. Procédé selon au moins l'une des revendications précédentes, **caractérisé en ce que** la chaleur dégagée dans l'eau de refroidissement est utilisée pour le chauffage et/ou la préparation d'au chaude.

7. Procédé selon au moins l'une des revendications précédentes, **caractérisé en ce que** la température de l'eau de refroidissement après qu'elle a traversé le processus est située entre 30 et 70°C et de préférence aux alentours de 50°C.
